(19) Europäisches Patentamt
European Patent Office
Office européen des brevets

(11) Publication number : **0 583 138 A2**

(12) **EUROPEAN PATENT APPLICATION**

(21) Application number : **93306183.0**

(51) Int. Cl.[5] : **G06K 9/80**

(22) Date of filing : **05.08.93**

(30) Priority : **13.08.92 US 929617**

(43) Date of publication of application :
**16.02.94 Bulletin 94/07**

(84) Designated Contracting States :
**DE FR GB IT SE**

(71) Applicant : **AMERICAN TELEPHONE AND TELEGRAPH COMPANY**
**32 Avenue of the Americas**
**New York, NY 10013-2412 (US)**

(72) Inventor : **Sinden, Frank William**
**739 Prospect Avenue**
**Princeton, New Jersey 08540 (US)**
Inventor : **Wilfong, Gordon Thomas**
**23 Home street**
**Gillette, New Jersey 07933 (US)**

(74) Representative : **Watts, Christopher Malcolm Kelway, Dr. et al**
**AT & T (UK) Ltd. 5, Mornington Road**
**Woodford Green Essex, IG8 0TU (GB)**

(54) **Method of recognizing symbols differing from reference symbols by affine transformations.**

(57) An unknown symbol handwritten on a digitizing tablet is compared with symbols in a predefined "alphabet" or library of model symbols and the closest match chosen, taking into account all or some subset of affine transformations of the unknown symbol with respect to the alphabet symbols. A sequence of samples of the pen position is recorded while a symbol is being written on a digitizing tablet. The samples form a vector, which is then translated so that the centroid of the symbol lies at an origin. The comparison involves finding the minimum "distance" between the vector for the unknown symbol and any vector that can be obtained by linear transformations of the vectors for the model symbols. The model vector for which the minimum such distance can be obtained indicates the alphabet symbol the writer most likely intended to write. Alternative embodiments are described in which the types of linear transformations allowed are restricted.

EP 0 583 138 A2

## Technical Field

This invention relates to symbol recognition and more particularly to recognition of handwritten symbols that are distorted or displaced in a way that can be partially corrected by an affine transformation.

## Background of the Invention

A number of methods of recognizing handwritten characters have been developed. Many such methods are described in the article by Tappert et. al entitled "The State of the Art in On-Line Handwriting Recognition" published in IEEE Transactions on Pattern Analysis and Machine Intelligence, Vol. 12, No. 8 (August 1990).

In copending Application No. 93302070.3 we described a method of recognizing handwritten symbols in which a sequence of samples of a pen position is recorded as the symbol is being written. The samples form a vector, which is then translated so that the centroid of the symbol lies at an origin. The samples for an unknown symbol are compared with those of a set of stored reference symbols. Each comparison involves online calculation of a correlation factor from scalar products of the vector for the unknown symbol and two versions of the vector for each model symbol and choosing the model symbol having the highest correlation factor. Recognition is independent of the size, position and orientation of the symbols.

Changes in the position, orientation and size of a symbol as well as certain distortions that transform squares into rectangles or parallelograms as well as certain reflections can be represented mathematically by linear equations. Such transformations, i.e., all transformations representable by linear equations, are known collectively as *affine transformations*.

Even though translations, size changes and rotations can be handled effectively as described in our copending application referred to above, other kinds of affine transformations, especially of the type in which a square is distorted into a rectangle or parallelogram, remain as possible problems in recognizing handwritten symbols. Such affine transformations, provided they are not too extreme, lie within the range of variation commonly observed in handwritten or hand-printed symbols. It is desirable, then, for a symbol recognition system for handwritten characters to be tolerant of these kinds of distortions in addition to other possible affine transformations.

## Summary of the Invention

An unknown symbol handwritten on a digitizing tablet is compared with symbols in a predefined "alphabet" or library of model symbols and the closest match chosen, taking into account all or some subset of affine transformations of the unknown symbol with respect to the alphabet symbols. A sequence of samples of the pen position is recorded while a symbol is being written on a digitizing tablet. The samples form a vector, which is then translated so that the centroid of the symbol lies at an origin. The comparison involves finding the minimum "distance" between the vector for the unknown symbol and any vector that can be obtained by linear transformations of the vectors for the model symbols. The model vector for which the minimum such distance can be obtained indicates the alphabet symbol the writer most likely intended to write. Alternative embodiments are described in which the types of linear transformations allowed are restricted.

These and other aspects of the invention will become apparent from the accompanying drawings and the detailed description.

## Brief Description of the Drawing

FIG. 1 is a block diagram of a system for performing the invention.

FIG. 2. is a flow chart showing how samples of a handwritten symbol are taken.

FIG. 3 is a diagram showing handwritten symbols and dots representing samples taken for such symbols.

FIG. 4 is a flow chart showing how the samples for an unknown symbol and the model symbols are compared to identify the unknown symbol.

## Detailed Description

FIG. 1 is a block diagram of a system for performing the invention. Symbols are written with stylus or pen 10 on digitizing table or pad 11. Pad 11 is capable of sensing the position of the tip of pen 10 on the surface of pad 11 as well as the presence of pen 10 on the pad.

Pad 11 is connected to processor 12. With some types of pads, pen 10 may also be connected to processor 12 as indicated by line 17. Symbol memory 13 is used to store representations of model symbols. Registers

14 and 15 are used for storing, respectively, the number of strokes in each symbol and the number of samples taken for each stroke. Typically, memory 13 and registers 14 and 15 would be part of the random-access memory of processor 12. An example of a processor suitable for performing the invention is a Sun SPARCstation™.

In operation, as a symbol is written on pad 11, processor 12 collects a time sequence of samples of the position of the tip of pen 10 on the surface of pad 11. Each sample is a set of x-y coordinates of the position of the tip of pen 10. Typically, such samples are taken at a rate of about 250 samples per second and the x-y coordinates and the position of pen 10 can be sensed with a resolution of about 0.1 mm. A typical handwritten alphanumeric character will have from 100-250 samples.

Symbols can be written any size, at any orientation, and at any location on pad 11. Symbols can be letters, words, Chinese or Kanji characters, cursive script, engineering or chemical symbols; in short, anything that can be written. The only limitations are the size of the pad and the amount of memory needed to record the samples taken.

FIG. 2 is a flow chart showing how samples of a handwritten symbol are recorded by the system of FIG. 1. As will be clear to one skilled in the art, the activities shown in FIG. 2 (and FIG. 4) would typically be controlled by a computer program stored in memory in processor 12.

As indicated by blocks 20 and 21, processor 12 waits until pen 10 touches pad 11, then initializes stroke register 14 and sample register 15. As each stroke of the symbol is written, processor 12 takes samples at its sampling rate of the position of the tip of pen 10 on tablet 11, stores such samples in its memory and increments the sample counter, as indicated by blocks 22 and 23. Samples are taken until pen 10 is lifted from pad 11, as indicated by block 24.

When pen 10 is lifted from pad 11, a determination must be made whether the symbol is complete. This determination can be achieved, for example, by timing the interval between the time pen 10 is lifted and the time it again touches pad 11. If the interval is short, say less than 0.5 seconds, it can be assumed that an additional stroke will follow. If the interval is longer, then it can be assumed that the symbol is complete. Block 25 represents such decision. If an additional stroke will follow, then the number of samples taken for the stroke is stored and the sample register is re-initialized, as indicated by block 28, and the stroke register is incremented, as indicated by block 29, before the next sample is taken.

Both model symbols and unknown symbols are written into the system by means of pen 10 and pad 11. The system is essentially "trained" by writing in at least one model for each symbol that the system is expected to recognize and associating the samples recorded for that model symbol with a corresponding label. Thus, if it is desired for the system to be able to recognize alphanumerical characters, models for each character are so written and associated with the corresponding letter or number.

If the models are highly stylized or individualistic, then only the writer of the models may be able to write characters that can be correctly recognized. However, a number of different examples of each character can be entered as models to take into account the variation that is possible.

Processor 12 can be either in the mode of accepting model symbols or in the mode of accepting unknown symbols. Referring again to FIG. 2, if the symbol is being written as a model symbol, then as indicated by blocks 26 and 27, the samples for such symbol are stored in symbol memory 13 of processor 12. Before such samples are stored, however, they are translated so that the "center of gravity," or centroid, of the symbol is at an origin. As will be seen, this translation performed on the model symbols and the unknown symbols is an initial step in comparing an unknown symbol with the model symbols and positions the unknown and model symbols with respect to each other so that the location of the unknown symbol on pad 11 is irrelevant and so that linear transformations can be taken into account consistently. The method used to perform the translation is described below, and is identical to that described in our copending application No. 93302070.3.

If the symbol written is an unknown symbol, then as indicated at block 26 in FIG. 2, processor 12 proceeds with the steps shown in the flow chart of FIG. 4.

FIG. 3 is a diagram showing typical handwritten symbols and the series of dots representing samples taken for such symbols. The block letter "A" shown on the left can be written with two strokes 30 and 31 with the strokes moving in the directions shown by the arrows. The dotted version of letter "A" shows samples taken as the letter is written with the speed of the pen tip relatively constant. The first and last samples of the first stroke are 32 and 33; the first and last samples of the second stroke are at 34 and 35. The cursive letter "a" shown at the right would usually be written with one stroke 36 that reverses at point 37, but which would typically be written without lifting the pen from the pad. The first and last samples of stroke 36 are shown at 38 and 39.

FIG. 4 is a flow chart showing how the samples for an unknown symbol and the model symbols are compared to identify the unknown symbol. After an unknown symbol is entered, the vector $V(\xi)$ for a model symbol having the same number of strokes as the unknown is retrieved, as indicated by blocks 42 and 43. Vector $V(\mu)$ for the unknown and vector $V(\xi)$ for the model must then be compared to determine how well they correlate. For the comparison to proceed, however, it is necessary that $V(\mu)$ and $V(\xi)$ contain the same number of samples and, if the symbol contains more than one stroke, it is preferable that the number of samples in each stroke correspond. This is accomplished by equalizing the number of samples in $V(\mu)$ and $V(\xi)$, stroke by stroke. This equalization can be accomplished as described in our copending application No. 93302070.3.

After equalization, $V_\alpha$ is then translated as indicated by block 45 so that the centroid of the unknown symbol lies at the origin, as was also done for the model symbols when they were stored (block 27 in FIG. 2). To perform this translation on a vector, the centroid z is found by

$$z = \left( \frac{1}{n} \sum_{i=1}^{n} x_i , \frac{1}{n} \sum_{i=1}^{n} y_i \right) = (x_z, y_z)$$

and the translation is performed by evaluating

$$\bar{x}_i = x_i - x_z \text{ and } \bar{y}_i = y_i - y_z \text{ for } 1 \leqq i \leqq n$$

where n is the number of samples.

Vector $V(\mu)$ representing the unknown symbol and vector $V(\xi)$ representing the model symbol each contain n samples having x and y coordinates. Therefore, each such vector contains 2n different quantities and can be thought of as a point in 2n-dimensional space. Recall that $V(\mu)$ and $V(\xi)$ have been equalized so that both have the same number of samples and translated so that the centroids of their respective symbols lie at an origin. The angle $\phi$ between two vectors is a measure of the distance between them. If a linear transformation is performed on the set of points forming one of the vectors, $\phi$ will change. The smaller value of $\phi$ (or the higher the value of cosine $\phi$), the higher the correlation between the symbols represented by the vectors. The vector $V(\xi)$ for each model symbol is subjected to the linear transformation that results in the minimum $\phi$ for such model symbol with respect to the unknown symbol. Then the model symbol associated with the smallest minimum $\phi$ is chosen to identify the unknown symbol.

In order to perform the calculations necessary to find the model symbol associated with the smallest minimum $\phi$, it is convenient to also arrange the n samples for the unknown and model symbols in matrix form. For example, for the matrix $\mu$ for the unknown symbol, the notation $\mu_{ij}$ will be used to denote the entry in the $i^{th}$ row and $j^{th}$ column of matrix $\mu$. Therefore, the matrix $\mu$ will contain the entries $\mu_{ij}$, where i=1,...,n and j=1,2 and each of the model matrices $\xi$ will contain the entries $\xi_{ij}$, where i=1,...,n and j=1,2.

A linear transformation can be expressed as a 2 x 2 matrix with entries $p_{ij}$ where i=1,2 and j=1,2. A transformed model matrix can then be written as

$$\omega_{ij} = \sum_{k} \xi_{ik} p_{kj} \qquad (1)$$

for i=1,...,n; j=1,2 and k=1,2.

The matrix for the unknown symbol and the transformed model matrix must both be normalized so that

$$\sum_{ij} \omega_{ij}^2 = 1 \qquad (2)$$

and

$$\sum_{ij} \mu_{ij}^2 = 1 \qquad (3)$$

In the case of the matrix for the unknown symbol, normalization is accomplished by multiplying all sample points $\mu_{ij}$ by an appropriate constant. In the case of the model matrices, normalization is accomplished by placing appropriate restraints on the values of $p_{ij}$.

A linear transformation (expressed as values of $p_{ij}$) is needed that will optimally match $V(\omega)$ to $V(\mu)$ by minimizing the angle $\phi$ between $V(\omega)$ and $V(\mu)$ in 2n-space. Since $\phi$ will be minimal when $\cos\phi$ (also expressed

as β) is maximal, it is necessary to find

$$\beta = \max_{p_{ij}} \sum \omega_{ij}\mu_{ij}, \quad \text{subject to } \sum_{ij} \omega_{ij}^2 = 1 \qquad (4)$$

As will be clear from the derivations in Appendix A, it turns out to be more convenient to calculate $\beta^2$. Since the choice of model symbols can be made just as readily by comparing the values of $\beta^2$ for each model symbol instead of the values of β, it is not necessary to calculate the square root of $\beta^2$. Neither is it necessary to calculate the values of $p_{ij}$. Thus, the value of $\beta^2$ is calculated for each model matrix ξ with respect to the matrix μ. The symbol for which $\beta^2$ is largest is then chosen as the symbol most probably intended by the writer of μ. The value of $\beta^2$, then, can be considered as a correlation factor representing the degree of closeness of vector V(μ) for the unknown symbol to the closest vector that can be obtained by a linear transformation of the set of points forming the vector V(ξ) for a model symbol.

The calculation of the correlation factor $\beta^2$ from the matrix μ for an unknown symbol with respect to the matrix ξ for a model symbol will now be described. First, as indicated by blocks 46 and 47 in FIG. 4, the samples for the unknown symbol are normalized so that

$$\sum_{ij} \mu_{ij}^2 = 1$$

then, matrices a and c and a determinant Δ are calculated as follows:

$$a_{ij} = \sum_k \xi_{ki}\xi_{kj}$$

$$c_{ij} = \sum_k \xi_{ki}\mu_{kj}$$

$$\Delta = a_{11}a_{22} - a_{12}^2 \geqq 0$$

for i = 1,2; j = 1,2 and k = 1,...,n.

The value of determinant Δ determines the next step, as indicated by block 48. If Δ>0, then, as noted in blocks 50 and 51, the values of $b_{ij}$ and $\beta^2$ for the model symbol are calculated as follows:

$$b_{ij} = \frac{(-1)^{i+j}}{\Delta} a_{\bar{i}\bar{j}}$$

$$\beta^2 = \sum_{ijk} b_{ij} c_{ik} c_{jk}$$

where i = 1,2; j = 1,2; k = 1,2; $\bar{i}$ = 3-i and $\bar{j}$ = 3-j; and the value of $\beta^2$ is stored.

If Δ= 0, then, as indicated in block 49, the value of $\beta^2$ for the model symbol is calculated as follows:

$$\beta^2 = \frac{1}{a_{ii}} \sum_j c_{ij}^2$$

where i = 1,2; j = 1,2; and the value of $\beta^2$ is stored.

If Δ<0, the model symbol for which $\beta_2$ is being calculated is a reflection of the unknown symbol and, as indicated by arrow 52, no calculation is made for $\beta^2$ and such model is dropped from consideration.

Derivations of the above formulas for $\beta^2$ are given in Appendix A.

As indicated by blocks 53 and 54, when the value of $\beta^2$ for the last model to be considered has been calculated, the unknown symbol is recognized as the model symbol having the highest value of $\beta^2$.

In the above embodiment of the invention, all possible affine transformations of the model symbols were permitted when comparisons were being made with the unknown symbol. However, in a particular application, it may be desirable to limit the transformations to a subset of the possible transformations. For example, in recognition of words of cursive script written along a horizontal line, where the orientation of the words is presumably fixed, the most likely linear transformations are variations in width (x-direction stretch), height (y-direction stretch) and degree of slant (shear), and rotations need not be considered.

Limitations on the permitted affine transformations can be accomplished by imposing constraints on the elements $p_{ij}$ of the transformation matrix. For example the constraints

$$p_{11} = p_{22}$$
$$p_{12} = p_{21}$$

limit the transformations to rotations and dilations (changes of size). For another example, the constraint

$$p_{12} = 0$$

limits the transformation to a combination of x-dilation, y-dilation and x-shear.

As a third example, the constraint

$$\Delta > 0$$

eliminates reflections from the set of affine transformations. It will be obvious to those skilled in the art that many other constraints can be imposed that limit the affine transformations to some subset.

Constraints must be imposed before solving the constrained maximum problem (equation 8 in Appendix A). For example, when the constraint

$$p_{12} = 0,$$

discussed above, is imposed, the solutions $\beta^2$ becomes

$$\beta^2 = \sum_{ij} b_{ij}\, c_i,\, c_j,\, + \frac{c_{22}^2}{a_{22}}$$

In recognizing symbols it is advantageous to limit the set of transformations allowed. If too small a set is allowed, the system will be too rigid and will fail to recognize forms of the symbol that are slightly displaced or distorted. If too large a set is allowed, spurious matches may occur, as when an N, rotated 90° spuriously matches a Z.

In applications in which the orientation of the symbols is known, as when they are written on a given line, imposition of the constraint

$$p_{12} = 0$$

is especially advantageous because it allows for exactly those simple distortions (especially slant) that are most common in handwriting.

A second kind of constraint, a threshold constraint, can be applied after the calculation of $\beta^2$. In some cases, for example, it may be advantageous to limit rotations: If in a match between the unknown symbol and a model, the optimal rotation angle is greater than some threshold, the model may be rejected. This could eliminate such spurious matches as that between the N and the Z mentioned above. It may also be advantageous to limit the amount of x-shear, or the amount of x or y dilation. The best value for such thresholds will depend on circumstances.

In the above description of embodiments of the invention and the derivations in Appendix A, linear transformations are considered to be applied to each model symbol to find the closest match of such model symbol to the unknown symbol. Another approach is to apply linear transformations to the unknown symbol to find the closest match to each model symbol. Effectively, both approaches are equivalent and yield the same formulas for the value of $\beta^2$.

As will be clear to those skilled in the art, the methods of the invention are clearly applicable to any problem of finding the best match between two sets of points in a plane where one set is approximately an affine transformation of the other and the correspondences between the points in the two sets are given. Such problems arise, for example, in model-based vision recognition systems.

## Appendix

Substituting Equation (1) into Equation (3) gives

$$\sum_{ij} \omega_{ij}^2 = \sum_{ijkl} \xi_{ik} \xi_{il} p_{kj} p_{lj} = 1 \qquad (5)$$

Let

$$a_{ij} = \sum_{k} \xi_{ki} \xi_{kj} \text{ for } i=1,2; j=1,2.$$

Then Equation (5) can be written

$$\sum_{ij} \omega_{ij}^2 = \sum_{ijk} a_{ij} p_{ik} p_{jk} = 1 \qquad (6)$$

Matrix $[a_{ij}]$ is symmetric, with $a_{11} > 0$ and $a_{22} > 0$. By Schwarz's Inequality, the determinant $\Delta$ of such matrix is nonnegative:

$$\Delta = a_{11} a_{22} - a_{12}^2 \geq 0 \qquad (7)$$

Note that when $\Delta > 0$, $[a_{ij}]$ is positive definite. This fact will be referred to later.

Substituting Equation (1) into the scalar product to be maximized from Equation (4) gives

$$\sum_{ij} \omega_{ij} \mu_{ij} = \sum_{ijk} \xi_{ik} \mu_{ij} p_{kj} \qquad (8)$$

Let

$$c_{ij} = \sum_{k} \xi_{ki} \mu_{kj} \text{ for } i=1,2; j=1,2; k=1,...,n. \qquad (9)$$

The 2×2 matrices $[a_{ij}]$ and $[c_{ij}]$ contain all the information needed from the model matrix $[\xi_{ij}]$ and $[\mu_{ij}]$. Accordingly, the 2×n maximization problem of Equation (4) reduces to the following 2×2 problem:

$$\beta = \max_{p_{ij}} \sum_{ij} c_{ij} p_{ij} \text{ subject to } \sum a_{ij} p_{ik} p_{jk} = 1 \qquad (10)$$

where i = 1,2; j = 1,2; k = 1,2.

Using the Lagrange multiplier $\lambda$, Equation 10 can be rewritten as an unconstrained maximum problem:

$$\beta=\max_{\lambda,p_{ij}}\left[\sum_{ij}c_{ij}p_{ij}+\lambda\left[\sum_{ijk}a_{ij}p_{ik}p_{jk}-1\right]\right] \quad (11)$$

Setting the partial derivatives equal to zero gives:

$$\frac{\partial[]}{\partial p_{ij}}=c_{ij}+2\lambda\left[\sum_k a_{ik}p_{kj}\right]=0 \quad (12)$$

and

$$\frac{\partial[]}{\partial p_{ij}}=\sum_{ijk}a_{ij}p_{ik}p_{jk}-1=0 \quad (13)$$

The derivation of Equation (12) uses the symmetry relation $a_{ij}=a_{ji}$. Equation (12) is a set of four equations in the four unknowns $p_{ij}$. However, Equation (12) can be rewritten as two sets of two equations in two unknowns, one set for j = 1 and the other set for j = 2.

$$\sum_k a_{ik}p_{k1}=-\frac{1}{2\lambda}c_{i1} \quad (14)$$

$$\sum_k a_{ik}p_{k2}=-\frac{1}{2\lambda}c_{i2} \quad (15)$$

Both sets of equations include the same coefficient matrix $[a_{ik}]$. If the determinant $\Delta>0$, then the matrix can be inverted. Let the inverse of $[a_{ik}]$ be $[b_{ik}]$:

$$b_{11}=\frac{a_{22}}{\Delta} \qquad b_{12}=-\frac{a_{12}}{\Delta}$$

$$b_{21}=-\frac{a_{12}}{\Delta} \qquad b_{22}=\frac{a_{11}}{\Delta} \quad (16)$$

The solutions of Equations (14) and (15), then, are

$$p_{ij}=\frac{1}{2\lambda}\sum_k b_{ij}c_{kj} \quad (17)$$

Substituting Equation (17) into Equation (13) gives

$$2\lambda=\pm\left[\sum_{ijk}b_{ij}c_{ik}c_{jk}\right]^{\frac{1}{2}} \quad (18)$$

The two signs correspond to two solutions for $\lambda$.

Substituting Equation (18) into Equation (14) gives the optimal linear transformation $p_{ij}$ as

$$p_{ij} = \pm \frac{\sum_{k} b_{ik} c_{kj}}{\sum_{rsk} b_{rs} c_{rk} c_{sk}} \qquad (19)$$

Further substitution of Equation (19) into Equation (13) gives

$$\beta = \pm \left[ \sum_{rsk} b_{rs} c_{rk} c_{sk} \right]^{\frac{1}{2}} \qquad (20)$$

The two signs give maximum and minimum values for $\beta$. The sign is chosen so that $\beta$ is positive.

For $\beta$ to be real and finite, the quantity under the square root must be positive and finite. Since $[a_{ij}]$ is positive definite, its inverse $[b_{ij}]$ is also positive definite. Therefore, the summation

$$\sum_{ijk} b_{ij} c_{ik} c_{jk}$$

is positive for both values of k, the summation in Equation (20) is positive and $\beta$ is real.

Equation (20) does not give a finite result for $\beta$ when $\Delta = 0$. From Equations (6) and (7), it follows that $\Delta = 0$ if and only if

$$\xi_{k1} = \alpha \xi_{k2} \qquad (21)$$

for all k and some constant $\alpha$. This occurs if and only if all the points forming the model vector lie on a line passing through the origin. In this case, the matrices $[a_{ij}]$ and $[c_{ij}]$ have the special forms

$$a_{ij} = a^2 a^{i+j-2}, \text{ where } a^2 = \sum_{i} \xi_{i1}^2 \qquad (22)$$

$$c_{ij} = \alpha^{i-1} c_j, \text{ where } c_j = \sum_{k} \xi_{k1} \mu_{kj} \qquad (23)$$

and Problem (10) reduces to

$$\max_{p_{ij}} \left[ \sum_{j} c_j (p_{ij} + \alpha p_{2j}) \right] \text{ subject to } a^2 \sum_{j} (p_{ij} + p_{2j})^2 = 1 \qquad (24)$$

This is satisfied when

$$p_{ij}+\alpha p_{2j} = \frac{c_j}{a\left(\sum_j c_j^2\right)^{\frac{1}{2}}} \quad (25)$$

Therefore, the solution to Problem (24) is given by

$$\beta = \frac{1}{a}\left(\sum_j c_j^2\right)^{\frac{1}{2}} \quad (26)$$

Using the more general notation used elsewhere, Equation (26) can be rewritten as

$$\beta = \left(\frac{1}{a_{ii}}\sum_j c_{ij}^2\right)^{\frac{1}{2}} \quad (27)$$

where both values of i give the same value of $\Delta$.

Since the necessary comparisons can be made between values of $\beta^2$ as readily as between values of $\beta$, it is not necessary to actually calculate the square root.

## Claims

1. A method of finding the closest match for an unknown symbol in a set of stored model symbols wherein said unknown symbol and said model symbols are each represented as an ordered set of coordinate samples with the centroids of said unknown symbol and said model symbol at a common origin and wherein said samples for said unknown symbol are compared in turn with said samples for each of said model symbols,

   CHARACTERIZED IN THAT

   said method further comprises:

   before each comparison, equalizing the number of translated samples for said unknown symbol and said model symbol,

   during each said comparison, determining the maximum correlation with said unknown symbol that can be obtained by performing linear transformations on the samples for said model symbol or on the samples for said unknown symbol and

   after determining said maximum correlation for each model symbol, identifying as the closest match said model symbol associated with the highest maximum correlation,

   whereby said comparisons are independent of any affine transformation of said unknown symbol with respect to said model symbols.

2. The method of claim 1 wherein said calculating step further comprises:

   calculating said correlation as:

   if $\Delta > 0$:

$$\beta^2 = \sum_{ijk} b_{ij} c_{ik} c_{jk}$$

for $i = 1,2$; $j = 1,2$; $k = 1,2$
if $\Delta = 0$:

$$\beta^2 = \frac{1}{a_{ii}} \sum_j c_{ij}^2$$

for $i=1,2$; $j=1,2$
where

$$a_{ij} = \sum_k \xi_{ki} \xi_{kj}$$

$$b_{ij} = \frac{(-1)^{i+j}}{\Delta} a_{\bar{ij}}$$

$$c_{ij} = \sum_k \xi_{ki} \mu_{kj}$$

$$\Delta = a_{11} a_{22} - a_{12}^2 \geqq 0$$

for $i = 1,2$; $j = 1,2$, $k = 1,...,n$
and n is the number of coordinate samples in each said equalized ordered set.

FIG. 1

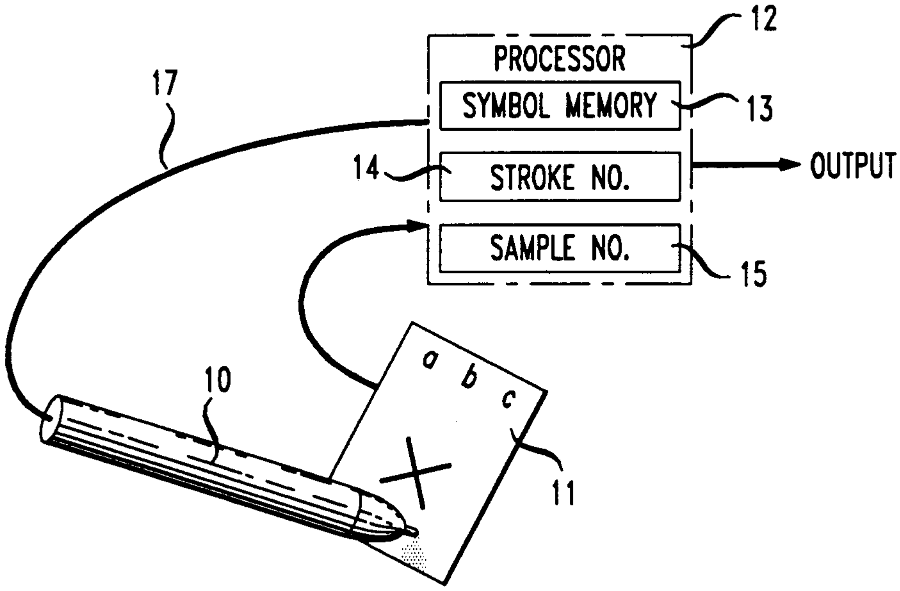
12
PROCESSOR
SYMBOL MEMORY
13
17
14
STROKE NO.
OUTPUT
SAMPLE NO.
15
10
a b c
11

FIG. 3

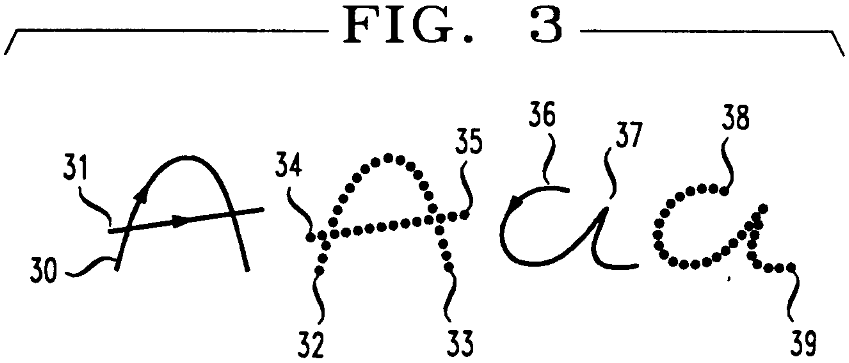
31
34
35
36
37
38
30
32
33
39

FIG. 2

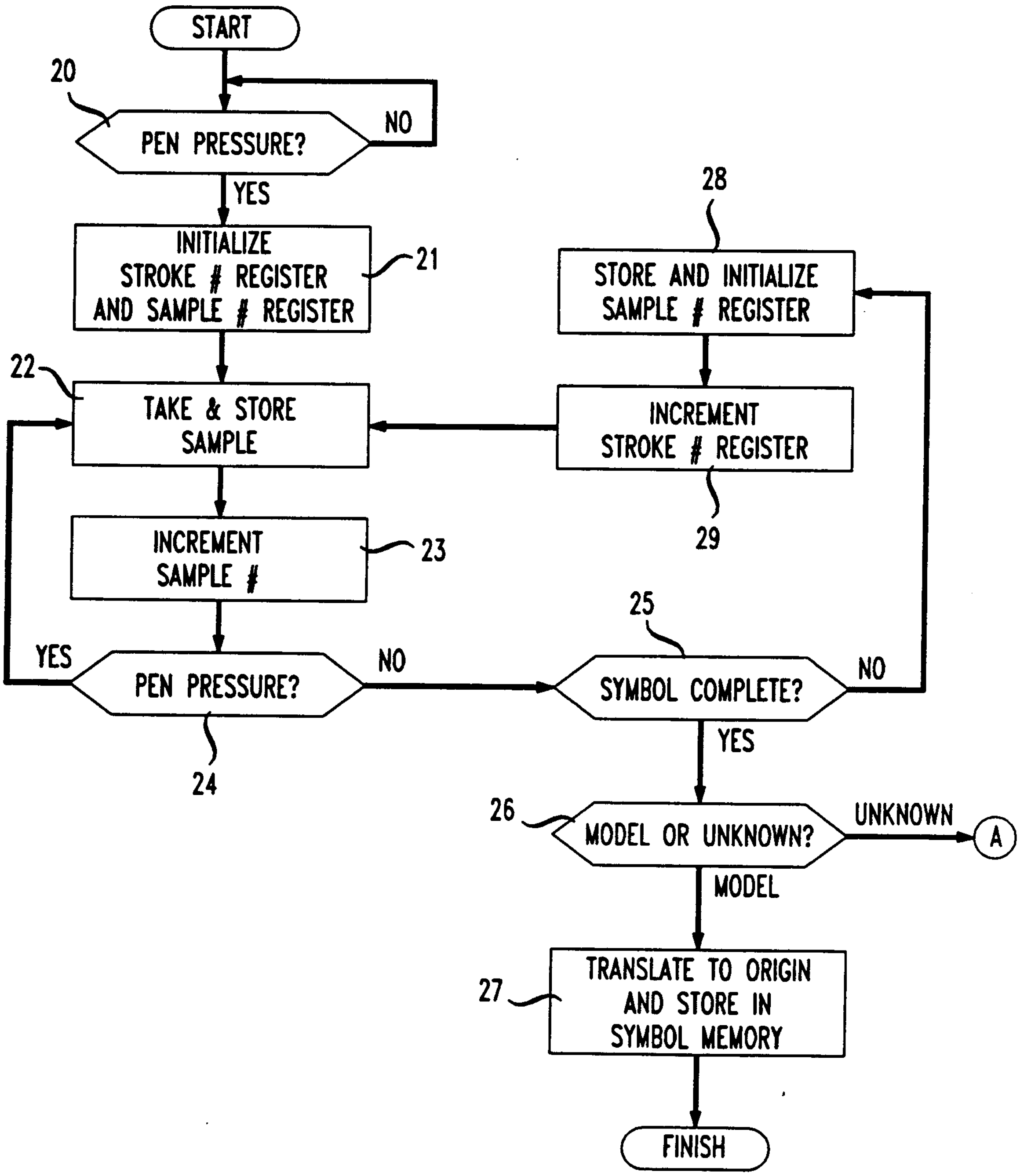
START
20
PEN PRESSURE?
NO
YES
INITIALIZE
STROKE # REGISTER
AND SAMPLE # REGISTER
21
22
TAKE & STORE
SAMPLE
INCREMENT
SAMPLE #
23
YES
PEN PRESSURE?
NO
24
28
STORE AND INITIALIZE
SAMPLE # REGISTER
INCREMENT
STROKE # REGISTER
29
25
SYMBOL COMPLETE?
NO
YES
26
MODEL OR UNKNOWN?
UNKNOWN
A
MODEL
27
TRANSLATE TO ORIGIN
AND STORE IN
SYMBOL MEMORY
FINISH

FIG. 4

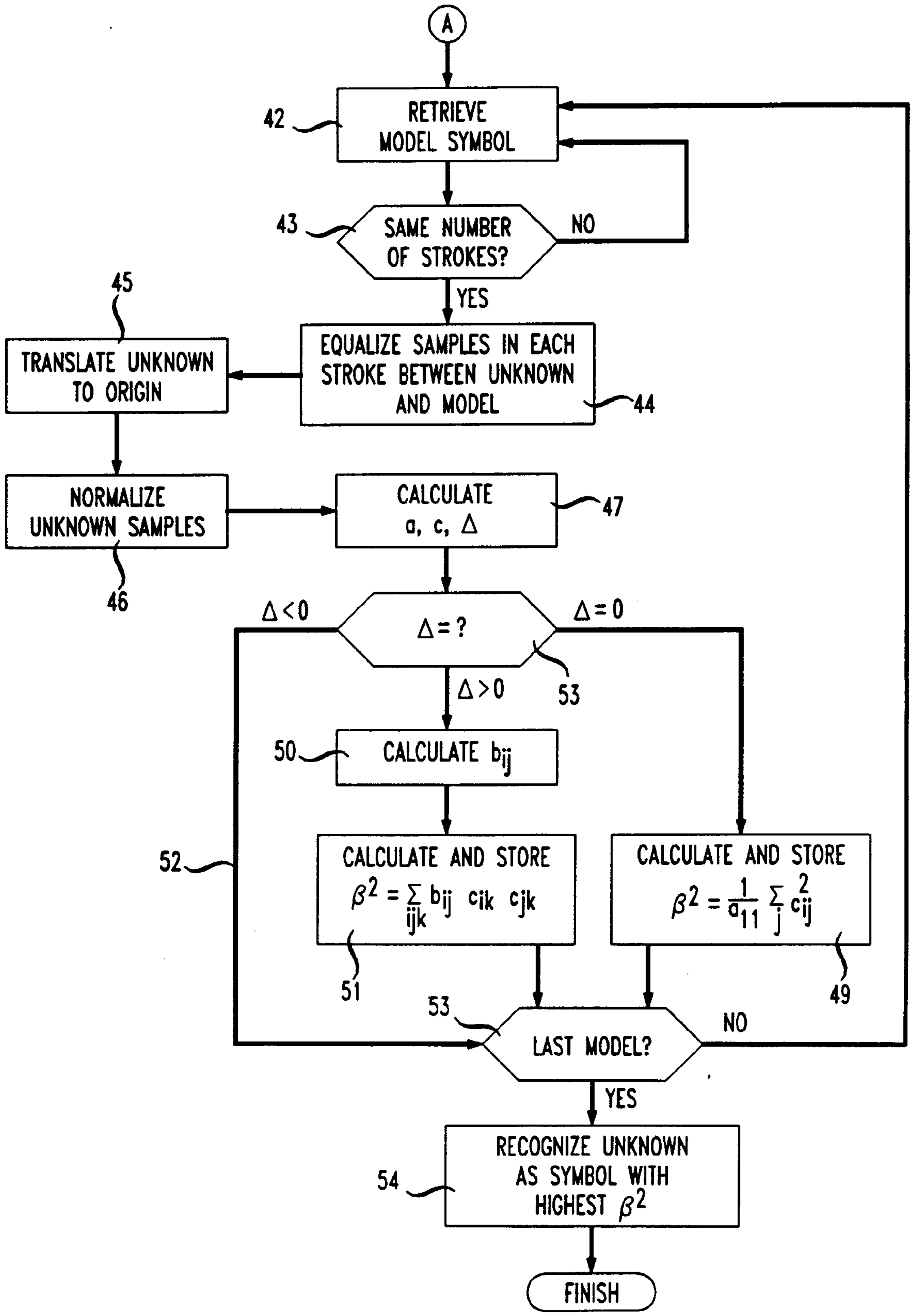
A
RETRIEVE MODEL SYMBOL
42
SAME NUMBER OF STROKES?
43
NO
YES
EQUALIZE SAMPLES IN EACH STROKE BETWEEN UNKNOWN AND MODEL
44
TRANSLATE UNKNOWN TO ORIGIN
45
NORMALIZE UNKNOWN SAMPLES
46
CALCULATE a, c, Δ
47
Δ = ?
53
Δ<0
Δ=0
Δ>0
CALCULATE $b_{ij}$
50
52
CALCULATE AND STORE $\beta^2 = \sum_{ijk} b_{ij} c_{ik} c_{jk}$
51
CALCULATE AND STORE $\beta^2 = \frac{1}{a_{11}} \sum_j c_{ij}^2$
49
LAST MODEL?
53
NO
YES
RECOGNIZE UNKNOWN AS SYMBOL WITH HIGHEST $\beta^2$
54
FINISH